(19) **Europäisches Patentamt / European Patent Office / Office européen des brevets**

(11) **EP 4 455 083 A1**

(12) # EUROPEAN PATENT APPLICATION

(43) Date of publication:
**30.10.2024 Bulletin 2024/44**

(21) Application number: **23170106.1**

(22) Date of filing: **26.04.2023**

(51) International Patent Classification (IPC):
**C01B 32/05** (2017.01)    **C01B 32/205** (2017.01)
**C04B 11/028** (2006.01)    **C10B 3/00** (2006.01)
**F27B 1/10** (2006.01)

(52) Cooperative Patent Classification (CPC):
**C01B 32/05; C01B 32/205; C04B 11/028; F27B 1/10**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **SGL Carbon SE**
**65201 Wiesbaden (DE)**

(72) Inventors:
- **SCHREINER, Christian**
  **86405 Meitingen (DE)**
- **SCHREINER, Tino**
  **86405 Meitingen (DE)**
- **LOSHER, Richard**
  **86405 Meitingen (DE)**

(54) **GRAPHITIZATION FURNACE COMPRISING CHANNEL COMPRISING PLATE-SHAPED WALL SEGMENTS**

(57) The present disclosure relates to a graphitization furnace 100 configured to graphitize particulate carbonaceous material. The graphitization furnace 100 comprises a raw material inlet 160 and a product outlet 170, and a channel 100 connecting the raw material inlet 160 and the product outlet 170. The channel 100 comprises an upstream section 120 closer to the raw material inlet 160 and a downstream section 130 closer to the product outlet 170. Both the upstream section 120 and the downstream section 130 comprise a plurality of discrete plate-shaped wall segments 140, 150 and both the upstream section 120 and the downstream section 130 have a polygonal cross-sectional shape.

Figure 1

EP 4 455 083 A1

## Description

### Technical Field

The present invention relates to the field of graphitization furnaces. More specifically, the present invention relates to graphitization furnaces comprising a channel comprising plate-shaped wall segments.

### Background

The most common commercially used anode material in lithium-ion batteries is graphite. The graphite can be lithiated to the state of $LiC_6$, which correlates to a theoretical maximal capacity of 372 mAh/g.

Artificial graphite may be produced by heating carbonaceous starting materials, such as coke and/or pitch, to temperatures of about 3000 °C under exclusion of oxygen. The heating may be performed in batch or continuous furnaces. In a continuous furnace, carbonaceous material is typically conveyed along a heated channel, transitioning to graphite while being conveyed.

The process of continuous graphitization may be advantageous because it may produce graphite more efficiently than a batch process and may allow for industrial scale production. However, the inventors have found that some carbonaceous materials, in particulate carbonaceous material in the form of powder, may have a tendency to cake in continuous furnaces. The caking may lead to an inhomogeneous temperature distribution, which in turn may result in a reduced product quality and consistency. It also may result in reduced process efficiency and higher production costs due to interruptions in the continuous process while resolving caking-induced channel blockage, as well as the need to re-process some products that have not been fully graphitized due to the caking.

In order to address the aforementioned issues, the inventors have developed a graphitization furnace.

### Summary

The present disclosure relates to a graphitization furnace configured to graphitize particulate carbonaceous material. The graphitization furnace comprises a raw material inlet and a product outlet, and a channel connecting the raw material inlet and the product outlet. The channel comprises an upstream section closer to the raw material inlet and a downstream section closer to the product outlet. Both the upstream section and the downstream section comprise a plurality of discrete plate-shaped wall segments and both the upstream section and the downstream section have a polygonal cross-sectional shape.

In some embodiments, the channel may comprise a central-channel-axis and the upstream section and downstream section may be arranged along the central-channel-axis.

In some embodiments, the cross-sectional shape of the upstream section and/or downstream section may be polygonal with n corners, wherein n is an integer between 3 and 12.

In some embodiments, the cross-sectional shape may be formed by the plurality of discrete plate-shaped wall segments.

In some embodiments, the graphitization furnace may be configured such that material flow in the graphitization furnace is gravity assisted.

In some embodiments, the graphitization furnace may be a vertical graphitization furnace.

In some embodiments, graphitization furnace may comprise an isolation structure surrounding the channel.

In some embodiments, at least two adjacent discrete plate-shaped wall segments of the plurality of discrete plate-shaped wall segments, may be connected by at least one joint, in particular at least one detachable joint.

In some embodiments, the at least one joint may comprise a dowel joint, a mitre joint, a cross dowel joint or a dovetail joint.

In some embodiments, the at least one joint may comprise a screw, more specifically a carbonaceous screw, and in particular a screw comprising graphite or carbon fiber reinforced carbon (CFRC).

In some embodiments, the at least one joint may comprise a clamp.

In some embodiments, the plurality of plate-shaped wall segments, may be joined by wrapping or clamping, in particular by wrapping with graphite fibers and/or carbon fibers.

In some embodiments, the at least one joint may be sealed.

In some embodiments, the joint is sealed with a sealing means comprising pitch, resins, carbon, graphite, graphite mats, graphite foil, expanded graphite , carbon mats, carbon felts and/or graphite felts, carbon fibers, CFRC.

In some embodiments, at least one discrete plate-shaped wall segment may comprise a high-temperature-resistant hard coating, in particular all discrete plate-shaped wall segments of the downstream section may comprise the high-temperature-resistant hard coating.

In some embodiments, at least one wall segment of the plurality of discrete plate-shaped wall segments, may be gas-permeable.

In some embodiments, a first discrete plate-shaped wall segment of the depicted channel may be gas-permeable and a second discrete plate-shaped wall segment may be gas-impermeable.

In some embodiments, the graphitization furnace may comprise a gas outlet.

In some embodiments, the gas outlet may be a tube extending through the isolation structure.

In some embodiments, the channel may comprise a heating zone, a high temperature reaction zone and a cooling zone.

In some embodiments, the heating zone may be arranged adjacent the raw material inlet, the cooling zone may be arranged adjacent the product outlet and/or the high temperature reaction zone may be disposed between the heating zone and the cooling zone.

In some embodiments, the gas outlet may be arranged in the heating zone and/or high temperature reaction zone.

In some embodiments, at least one gas-permeable discrete plate-shaped wall segment may be disposed in the heating zone and/or the high temperature reaction zone.

In some embodiments, the channel may comprise at least one gas inlet in the cooling zone or high temperature reaction zone.

In some embodiments, at least one gas-impermeable discrete plate-shaped wall segment may be disposed in the cooling zone, in particular wherein all discrete plate-shaped wall segments disposed in the cooling zone may be gas-impermeable.

In some embodiments, the at least one gas inlet may be connected to a gas pump and/or pressure regulator, in particular wherein the purge gas pump and/or pressure regulator is/are configured to maintain a pressure above the ambient pressure in the graphitization furnace.

In some embodiments, the at least one gas inlet may be connected to a heat exchanger configured to preheat the injected gas.

In some embodiments, the at least one discrete plate-shaped wall segment, of the plurality of discrete plate-shaped wall segments, may comprise or consists of graphite, in particular all of the plurality of discrete plate-shaped wall segments, may comprise or consist of graphite.

In some embodiments, at least one discrete plate-shaped wall segment may be a heating element or electrode.

In some embodiments, the wall thickness of the channel may be between about 5 mm to about 200 mm, in particular the wall thickness of the plurality of discrete plate-shaped wall segments, may be between about 5 mm to about 200 mm.

In some embodiments, the channel may comprise an agitator comprising a shaft and at least one mixing paddle.

In some embodiments, the at least one mixing paddle may be arranged in the cooling zone.

In some embodiments, the wall thickness of at least one discrete plate-shaped wall segment in the cooling zone may be higher than of at least one discrete plate-shaped wall segment in the heating zone, more specifically the wall thickness of the at least one discrete plate-shaped wall segment in the cooling zone may be between about 10 % to about 200 % higher compared to the wall thickness of the at least one discrete plate-shaped wall segment in the heating zone.

In some embodiments, the wall thickness of at least one discrete plate-shaped wall segment in the high temperature reaction zone may be higher than of at least one discrete plate-shaped wall segment in the heating zone, more specifically the wall thickness of the at least one discrete plate-shaped wall segment in the high temperature reaction zone may be between about 10 % to about 200 % higher compared to the wall thickness of the at least one discrete plate-shaped wall segment in the heating zone.

In a second aspect, the present disclosure relates to a method of using a graphitization furnace according to any preceding embodiment for preparing graphite from a carbonaceous raw material.

**Brief Description of the Figures**

Figure 1 shows an exemplary schematic cross-section of a graphitization furnace according to the first aspect.

Figure 2 shows an exemplary schematic isometric view of a channel comprising a plurality of plate-shaped wall segments.

**Detailed Description**

Hereinafter, a detailed description will be given of the present disclosure. The terms or words used in the description and the aspects of the present disclosure are not to be construed limitedly as only having common-language or dictionary meanings and should, unless specifically defined otherwise in the following description, be interpreted as having their ordinary technical meaning as established in the relevant technical field. The detailed description will refer to specific embodiments to better illustrate the present disclosure, however, it should be understood that the presented disclosure is not limited to these specific embodiments.

The present disclosure relates to a graphitization furnace 100 configured to graphitize particulate carbonaceous material. The graphitization furnace 100 comprises a raw material inlet 160 and a product outlet 170, and a channel 100 connecting the raw material inlet 160 and the product outlet 170. The channel 100 comprises an upstream section 120 closer to the raw material inlet 160 and a downstream section 130 closer to the product outlet 170. Both the upstream section 120 and the downstream section 130 comprise a plurality of discrete plate-shaped wall segments 140, 150 and both the upstream section 120 and the downstream section 130 have a polygonal cross-sectional shape.

The present inventors have found that the construction, maintenance and repair of graphitization furnaces can be extremely simplified and made in a cost-efficient manner by partitioning the furnace (or, more specifically, its channel which is in contact with the carbonaceous material) along the flow-direction of the carbonaceous material into a plurality of plate-shaped segments.

Both the use of plate-shaped wall segments as well as their arrangement in consecutive order (i.e. upstream and downstream) were found to be extremely helpful features in realizing a cost-effective operation of a graphitization furnace. The realizable benefits will be explained with the help of (non-limiting) examples in the following:

The heat treatment of the carbonaceous starting materials may be performed in a continuous furnace, i.e. a furnace which is configured for a continuous or semi-continuous production of graphite. Typically, carbonaceous raw material is conveyed along a channel between a raw material inlet and a product outlet, while being heated. The movement of the carbonaceous material through the furnace may lead to abrasion of the channel walls. However, the rate of abrasion may significantly differ along the channel. For example, in a vertical graphitization furnace a material column forms in the channel between the raw material inlet and the product outlet, resulting in increased pressure in furnace sections disposed closer to the product outlet. As a result, the rate of abrasion may be increased in parts of the channel disposed closer to the product outlet. Moreover, stirrers may be used to prevent caking and/or agglomeration of the carbonaceous material in some but not all sections of the furnace. This again may result in increased wear rates in those furnace sections accommodating the stirrers. Also hotter sections of the furnace may be subject to more wear than cooler sections of the furnace. Segmenting channel 100 in an upstream section 120 and a downstream section 130 which each comprises a plurality of discrete plate-shaped wall segments 140, 150 allows to tailor the position of individual segments to higher-wear areas (e.g. downstream areas) and to individually replace worn wall segments.

Moreover, the production and maintenance costs of a furnace can be kept low by relying on plate-shaped wall segments. While curved or even more complex forms can be (and, in practice, are) readily cut from large blocks of graphite, plate-shaped wall segments have the advantage of being more easily milled from a graphite block with only minimal cut-off. As graphite is an expensive material due to its resource-intensive production, avoiding cut-off is a major cost-saving factor. Furthermore, arranging discrete plate-shaped wall segments 140, 150 in both the upstream section 120 and the downstream section 130 in a polygonal cross-sectional shape may help in using identical plate-shaped wall segments to build the channel as well as reduce the overall number of parts/part shapes which are used to build the furnace. This may further be beneficial in that the number of parts stored for a potential maintenance of the furnace may be reduced.

The invention will now be described in more detail:

The present disclosure relates to the production of graphite. The term "graphite" is well known and attributed its common meaning in the art. More specifically, the term "graphite" may refer to a material comprising crystalline carbon in a hexagonal structure. Alternatively or additionally, the term "graphite" may refer to a material with a graphitization degree of at least about 46 %, more specifically 69 %, even more specifically at least about 80 % and in particular at least about 83 %.

Here and elsewhere, the term "wall section" refers to a part of channel's wall, more specifically to a part of the wall with a length of at least 5 cm, more specifically at least 10 cm. In particular the term "wall section" may refer to a part of wall with a length of at least 5 cm, in particular at least 10 cm, and a width of at least 10 cm. For example, a wall section may be one side of the downstream section 130, e.g. one discrete plate-shaped wall segment 140, 150.

The term "particulate material" is well-known and i.a. (inter alia) attributed its common meaning in the art. Additionally or alternatively, the term "particulate material" may refer to discrete particles, wherein the particles have size, e.g. diameter, of at least 1 $\mu$m. Additionally or alternatively, the term "particulate material" may refer to discrete, optionally granulated, particles, wherein the particles have a mean size of at least about 5 $\mu$m and up to about 20 cm.

The term "carbonaceous material" is well-known and i.a. attributed its common meaning in the art. Additionally or alternatively, the term "carbonaceous material" may refer to a material comprising carbon. More specifically, the term "carbonaceous material" may refer to a material comprising at least 20 wt.-%, more specifically at least 40 wt.-% and in particular at least 60 wt.-% of carbon, relative to the total weight of the material.

The term "discrete plate-shaped wall segment" is well-known and i.a. attributed its common meaning in the art. Additionally or alternatively, the term "discrete plate-shaped wall segment" may refer to a wall segment constituting a separate entity. Additionally or alternatively, the term "discrete plate-shaped wall segment" may refer to a wall segment separable from another wall segment, without destruction of either wall segment. Additionally or alternatively, the term "discrete plate-shaped wall segment" may refer to a wall segment consisting of a continuous material, in particular wherein the "discrete plate-shaped wall segment" is separated from another "discrete plate-shaped wall segment" by a material discontinuity. The material discontinuity may be for example a gap, a sealing means or a joint. Additionally or alternatively, the term "discrete plate-shaped wall segment" may refer to a wall segment that is unitary. Additionally or alternatively, the term "discrete plate-shaped wall segment" may refer to a wall segment that is a monobloc.

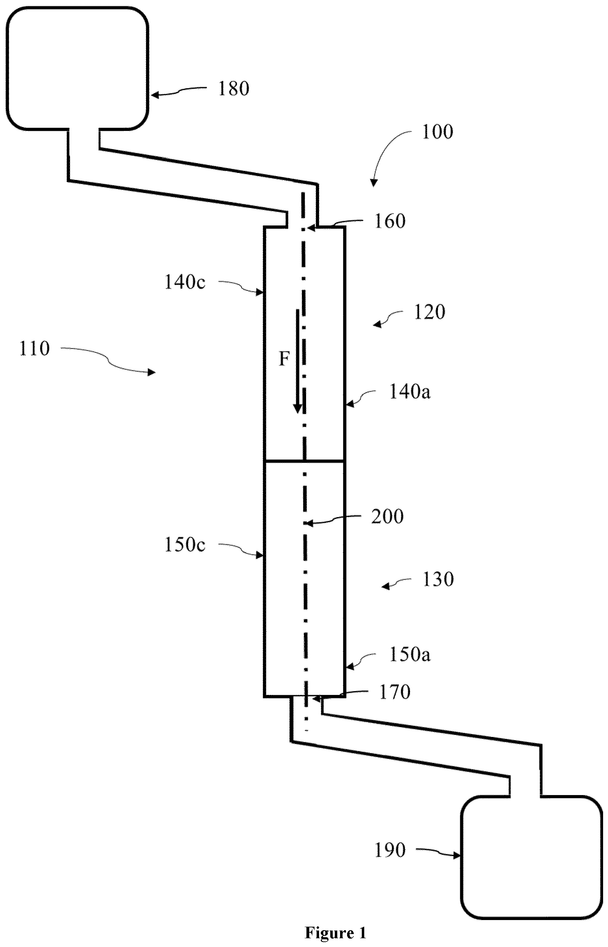

Figure 1 shows an exemplary schematic cross-section of a graphitization furnace 100 according to the first aspect. The graphitization furnace 100 comprises a raw material inlet 160 and a product outlet 170, and a channel 100 connecting the raw material inlet 160 and the product outlet 170. Carbonaceous material is supplied to channel 100 via the raw material inlet 160 and converted to graphite while passing through channel 100. Graphite is then discharged through the product outlet 170. In some embodiments, the raw material inlet 160 may be connected to a hopper comprising carbonaceous raw material. In some embodiments, the product outlet 170 may be connected to a collecting tank or a cooling device. Further, the channel 100 comprises an upstream section 120 closer to the raw material inlet 160 and a downstream section 130 closer to the product outlet 170. The channel 100 may comprise a central-channel-axis 200. The orientation of the central-channel-axis 200 may correspond to the material flow direction F. In some embodiments, the upstream section 120 and downstream section 130 may be arranged along the central-channel-axis 200. Both the upstream section 120 and the downstream section 130 comprise a plurality of discrete plate-shaped wall segments 140, 150 and both the upstream section 120 and the downstream section 130 have polygonal-cross-sectional shape. It should be noted that the graphitization furnace 100 may have a plurality of channel 100 sections and is not limited to one downstream section 130 and one upstream section 120.

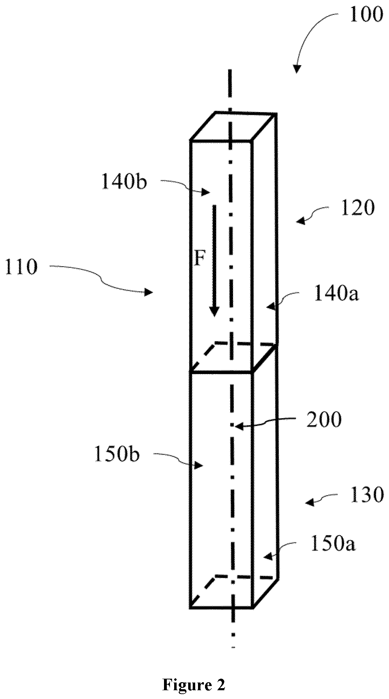

Figure 2 shows an exemplary schematic isometric view of a channel 100 comprising a plurality of discrete plate-shaped wall segments 140, 150. The channel 100 exhibits a rectangular cross-section. The upstream section 120 comprises four discrete plate-shaped wall segments 140, of which two discrete plate-shaped wall segment 140a, 140b are visible in Figure 2. The downstream section 130 also comprises four discrete plate-shaped wall segment 150, of which two discrete plate-shaped wall segments 150a, 150b are visible.

In some embodiments, the graphitization furnace 100 may be configured such that material flow in the graphitization furnace 100 is gravity assisted. While the material flow may be gravity assisted, the graphitization furnace 100, in particular the channel 110, may additionally include conveying means, for example to control the rate of material flow and/or discharge from the product outlet 170. In some embodiments, the graphitization furnace 100 may be a vertical graphitization furnace 100. As mentioned above, in a vertical graphitization furnace the rate of abrasion may vary along the channel length, which may require replacement of discrete plate-shaped wall segments 140, 150 at different points in time.

In the following, provisions for joining discrete plate-shaped wall segments 140, 150 are discussed.

In some embodiments, at least adjacent two discrete plate-shaped wall segments 140, 150 of the plurality of discrete plate-shaped wall segments 140, 150 may be connected by at least one joint, in particular at least one detachable joint. The at least one detachable joint may allow removing and replacing discrete plate-shaped wall segments 140, 150 from the channel 100. As mentioned above, the discrete plate-shaped wall segments 140, 150 may be subject to significant abrasion, e.g. due to the carbonaceous material moving within the channel 100. In particular, due to the increased pressure, the abrasion rate may be high in the downstream section 130. When a discrete plate-shaped wall segment has been abraded it may be replaced by detaching the discrete plate-shaped wall segment when using a detachable joint. Furthermore, the at least one detachable joint in combination with the plurality of discrete plate-shaped wall segments may allow for improved maintenance of other components disposed in the graphitization furnace 100, in particular the channel 100. As mentioned, the graphitization furnace 100 may comprise additional parts such as stirrers. The stirrers or parts thereof, such as mixing paddles, may also be abraded during the operation of the furnace. Replacement or repair of the stirrer or parts thereof may be facilitated by detaching at least one plate-shaped wall segment 140, 150 from the channel 110 by opening at least one joint.

Additionally or alternatively, in some embodiments, at least one discrete plate-shaped wall segment may comprise a high-temperature-resistant hard coating. For example, tantalum carbide and tantalum hafnium carbide are hard ceramics exhibiting melting points above 3800 °C. However, given the temperatures and that some contaminants present in the graphite, e.g. halogenides or sulfur, may attack the hard coatings, the discrete plate-shaped wall segments 140, 150 may require being recoated after some time, which may be facilitated using at least one detachable joint. In some embodiments, discrete plate-shaped wall segments 150 forming the downstream section 130 may comprise the high-temperature-resistant hard coating. As mentioned above, the rate of abrasion may be the highest in the downstream section 130 due to the increased pressure. Additionally, all discrete plate-shaped wall segments 140, 150 forming the channel 100 may comprise the high-temperature-resistant hard coating.

In some embodiments, the at least one joint may comprise a dowel joint, a mitre joint, a cross dowel joint or a dovetail joint.

In some embodiments, the at least one joint may comprise a screw, more specifically a carbonaceous screw or bolt, and in particular a screw or bolt comprising graphite or carbon fiber reinforced carbon (CFRC). For example, a mitre joint may be held together by a carbonaceous screw, which may be removed to allow disconnecting the at least two adjacent discrete plate-shaped wall segments 140, 150. The thread for the screw may be disposed in one of the at least one discrete plate-shaped wall segments 140, 150 being connected. The bolt may be used in conjunction with a nut, more specifically a carbonaceous nut comprising or consisting of graphite and/or CFRC.

In some embodiments, the screw or bolt may comprise at least about 90 wt.-% CFRC or graphite and in particular at least about 99 wt.-% CFRC or graphite, relative to the total weight of the carbonaceous screw. The term "CFRC" is well known and attributed its common meaning in the art. More specifically, the term "CFRC" may refer to a composite material comprising carbon fibers in a matrix of graphite. In particular, the term "CFRC" may refer to a composite material consisting of carbon fibers in a matrix of graphite.

In some embodiments, the at least one joint may comprise a clamp. The clamp may also comprise or consist of graphite. In some embodiments, the plurality of discrete plate-shaped wall segments 140, 150 may be joined by wrapping, in particular by wrapping with graphite fibers and/or carbon fibers. The clamp or wrapping may press the plurality of discrete plate-shaped wall segments 140, 150 together to join them. The clamp or wrapping may be used in addition to other types of joints, such as box joints or dovetail joints. Clamping and/or wrapping may be in particular used to connect discrete plate-shaped wall segments 140, 150 on the same level, e.g. clamping and/or wrapping may be used to join all discrete plate-shaped wall segments 140, 150 in the downstream section 130, whereas for example a dovetail joint may be used to join the downstream section 130 to the upstream section 120.

In some embodiments, the at least one joint may be sealed. For example, the joint may be sealed to prevent the particulate carbonaceous material from exiting the channel 100. Further, the sealing may aid in guiding the flow inert gas and/or purge gases in the channel 100. In some embodiments, the at least one joint may be sealed with a sealing means. In some embodiments, the sealing means may comprise pitch or a resin. The pitch may be graphitized during use of the graphitization furnace 100. Additionally or alternatively, in some embodiments, the sealing means may comprise graphite mats, graphite foil, expanded graphite or carbon mats, e.g. carbon fiber mats. In some embodiments, the joint may comprise carbon fibers and/or CFRC. The mats may be bonded to the discrete plate-shaped wall segments 140, 150 using pitch. Additionally or alternatively, in some embodiments, the sealing means may comprise carbon felts or graphite felts. The carbon mats, carbon fibers, or carbon felts may also graphitize during use of the graphitization furnace 100.

In some embodiments, the cross-sectional shape of the upstream section 120 and/or downstream section 130 may be polygonal with n corners, wherein n is an integer between 3 and 12. More specifically, the cross-sectional shape may be triangular, rectangular, square, or hexahedral, and in particular rectangular. The cross-sectional shape may be the inner perimeter of the channel 100 section's cross-section perpendicular to the central-channel-axis 200. In some embodiments, the cross-sectional shape may be formed by the plurality of discrete plate-shaped wall segments 140, 150. A square or rectangular cross-sectional shape may allow for facilitated construction, for example, as joints can be formed where two discrete plate-shaped wall segments 140, 150 abut orthogonally. A rectangular shape may be advantageous (in particular in comparison to a square shape) in that the distances that volatile impurities (ash) liberated during graphitization have to travel to reach the nearest wall is reduced. On the other hand, a hexagonal cross-section may provide a low surface-to-volume ratio and a high-stability. As heat transfer is generally proportional to an objects surface area, the furnace exhibiting a low surface-to-volume ratio may lead to a higher thermal efficiency. A higher thermal efficiency in turn may result in a higher energy efficiency of the high temperature process graphitization. Furthermore, the graphitization furnace 100 may comprise additional structures. In some embodiments, the (vertical) graphitization furnace 100 may comprise an isolation structure surrounding the channel 100. The isolation structure encasing the channel 100 is not depicted for overview purposes. As the isolation structure encases the channel 100, the surface-to-volume ratio of the aggregate of isolation structure and channel 100 would usually also be smaller for a hexagon compared to a triangular or rectangular cross-sectional shape.

In the following, provisions for gas removal from the channel 100 are discussed.

Additionally, constructing the channel 100 using discrete plate-shaped wall segment 140, 150 may allow varying the channel's 100 material properties in different section of said channel 100. As mentioned above, during the graphitization, volatile impurities may outgas from the carbonaceous material. These impurities, also referred to as ash, may outgas from the carbonaceous material during the graphitization. For example, coke, which may be used a carbonaceous starting material, may comprise up to 20 wt.-% of ash. To attain a high-quality graphite from the graphitization process, the ash needs to be removed from the carbonaceous material and therefore from the channel 100. As a result, at least part of the channel 110 must allow gases to escape, while other sections may preferably be gas-impermeable to control the direction of gas flow. Thereby, when pressure is applied to the channel 110, e.g. by feeding a purge gas into it, the ash may be removed in a directed manor through the sections of the channel 110 allowing gas to escape.

The channel may be for example surrounded by the aforementioned isolation structure encasing the channel, which may not be gas permeable. However, through the isolation structure a gas removal system or outlet may be disposed. Therefore, it may be expedient to have a section of the channel 110 close to the gas removal system or outlet be gas-permeable for efficient ash removal.

In these and other instances, the reference to a gas permeable structure or material may in particular refer to a structure or material having a gas permeability of at least 0.3 cm$^2$/s measured according to DIN 51935:2019-07. In these and other instances, the reference to a gas-impermeable structure or material may in particular refer to a structure or material having a gas permeability of less than 0.3 cm$^2$/s measured according to DIN 51935:2019-07. Suitable structures or materials having the required gas-(im)permeability are well-known to the skilled person. For instance, Sigrafine HLR, HLM and HLS grades may be used as gas permeable material, and Sigrafine HLX and isostatic graphite grades may be used as gas-impermeable material. All of these grades are available from SGL Carbon GmbH, Germany.

In some embodiments, the channel 100 may comprise a heating zone, a high temperature reaction zone and a cooling zone. The heating zone may be characterized by the temperature of the carbonaceous material increasing in flow direction when the graphitization furnace 100 is used. The high temperature reaction zone may be characterized by the carbonaceous material having a temperature of at least 80% of the maximum temperature achieved in the graphitization furnace 100. The cooling zone may be characterized by the temperature of the carbonaceous material decreasing in flow direction when the graphitization furnace 100 is used. In some embodiments, the heating zone may be arranged adjacent the raw material inlet 160 and/or the cooling zone may be arranged adjacent the product outlet 170. In some embodiments, the high temperature reaction zone may be disposed between the heating zone and the cooling zone.

In some embodiments, the gas outlet may be arranged in the heating zone and/or high temperature reaction zone. Arranging the gas outlet in the high temperature reaction zone may allow removing ash compounds with high boiling points, e.g. carbides, as these may only be gaseous in the high temperature reaction zone. Arranging the gas outlet in the heating zone may allow flushing the channel 100 from bottom to top, in particular in a vertical graphitization furnace 100 when the inert gas or purge gas is fed to the channel in the cooling zone.

Therefore, it may be expedient to have a section of the channel 100 close to the gas removal system or outlet be gas-permeable for efficient ash removal. Accordingly, in some embodiments, at least one gas-permeable discrete plate-shaped wall segment may be disposed in the heating zone and/or the high temperature reaction zone. Further, in some embodiments, the channel 100 may comprise at least one gas inlet in the cooling zone or high temperature reaction zone. Accordingly, in some embodiments, at least one gas-impermeable discrete plate-shaped wall segment may be disposed in the cooling zone, in particular all discrete plate-shaped wall segments disposed in the cooling zone may be gas-impermeable. In some embodiments, the at least one gas inlet may be connected to a gas pump and/or pressure regulator, in particular wherein the purge gas pump and/or pressure regulator is/are configured to maintain a pressure above the ambient pressure in the graphitization furnace 100. In some embodiments, the at least one gas inlet may be connected to a heat exchanger configured to preheat the injected gas.

As mentioned above, in some embodiments, the at least one discrete plate-shaped wall segment 140, 150 of the plurality of discrete plate-shaped wall segments 140, 150 may comprise or consist of graphite. More specifically, in some embodiments, all of the plurality of discrete plate-shaped wall segments 140, 150 may comprise or consist of graphite. In some embodiments, the at least one discrete plate-shaped wall segment may comprise at least about 80 wt.-% graphite, more specifically at least about 90 wt.-% and in particular at least about 99 wt.-% graphite, relative to the total weight of the discrete plate-shaped wall segment. Graphite may be highly heat-resistant. Alternatively, or additionally, at least one discrete plate-shaped wall segment 140, 150 may comprise or consist of CFRC. In some embodiments, the at least one discrete plate-shaped wall segment may comprise at least about 80 wt.-% CFRC, more specifically at least about 90 wt.-% and in particular at least about 99 wt.-% CFRC, relative to the total weight of the discrete plate-shaped wall segment. CFRC may also be highly heat-resistant and may exhibit improved mechanical properties compared to graphite.

Additionally, graphite may be used as a heating element. For example, a current may be applied to a section of the channel 100 comprising or consisting of graphite. The current, or electrical energy, may then be converted to thermal energy. The channel 100 itself may therefore heat the carbonaceous material disposed therein. Alternatively, graphite may be used as an electrode to apply a current to the carbonaceous material. Accordingly, in some embodiments, at least one discrete plate-shaped wall segment may be a heating element or electrode. CFRC may also be used as a heating element, or as an electrode to apply current to the carbonaceous material. Accordingly, in some embodiments, at least a portion of the channel 100 comprising or consisting of CFRC may be a heating element or electrode.

In some embodiments, the wall thickness of the channel 100 may be between about 5 mm to about 200 mm. In some embodiments, the wall thickness of the plurality of discrete plate-shaped wall segments 140, 150 may be between about 5 mm to about 200 mm. As mentioned above, the rate of abrasion at the top of a vertical graphitization furnace 100 may be higher compared to the bottom of the vertical graphitization furnace 100. Additionally, in some embodiments, the channel 100 may comprise an agitator comprising a shaft and at least one mixing paddle. The agitator may be configured to mix the carbonaceous material, in particular to prevent caking the in the cooling section. Therefore, in some embodiments, the at least one mixing paddle may be arranged in the cooling zone. However, the mixing action may increase the abrasion rate in the cooling zone. Therefore, a higher wall thickness of the discrete plate-shaped wall segments 140, 150 in lower parts of the channel 100, in particular the cooling zone, may be beneficial, such that the discrete wall-segments have an increased life-time before requiring exchange. Accordingly, in some embodiments, the wall thickness of at least one discrete plate-shaped wall segment in the cooling zone may be higher than of at least one discrete plate-shaped wall segment in the heating zone, more specifically the wall thickness of the at least one discrete plate-shaped wall segment in the cooling zone may be between about 10 % to about 200 % higher compared to the wall thickness of the at least one discrete plate-shaped wall segment in the heating zone.

Further, as mentioned above, graphite, and therefore discrete plate-shaped wall segments 140, 150 comprising graphite, may be used as heating elements. As the amount of generated thermal energy may be proportional to the amount of graphite, it may be beneficial to have a higher wall thickness of the discrete plate-shaped wall segments 140, 150 in the high temperature reaction zone, compared to the heating zone to achieve a higher temperature in the high temperature reaction zone. Accordingly, in some embodiments, the wall thickness of at least one discrete plate-shaped wall segment in the high temperature reaction zone may be higher than of at least one discrete plate-shaped wall segment in the heating zone, more specifically the wall thickness of the at least one discrete plate-shaped wall segment in the high temperature reaction zone may be between about 10 % to about 200 % higher compared to the wall thickness of the at least one discrete plate-shaped wall segment in the heating zone.

In a second aspect, the present disclosure relates to a method of using a graphitization furnace according to any preceding embodiment for preparing graphite from a carbonaceous raw material.

In some embodiments, the method may yield graphite having a graphitization degree of at least about 46 %, more specifically 69 %, even more specifically at least about 80 % and in particular at least about 83 %.

The crystallinity of a graphite may be described via its graphitization degree which may be measured by X-ray diffraction (XRD). The crystalline carbon in the graphite forms a plurality of honeycomb lattices. The distance between the plurality of honeycomb lattices is described by the parameter "interplane distance $d_{002}$. XRD may be used to measure the interplane distance $d_{001}$ between the plurality of lattices. An interplane distance $d_{002}$ of 0.3440 nm corresponds to the interplane distance of turbostratic graphite and an interplane distance of 0.3354 nm corresponds to the interplane distance in a perfect graphite crystal.

The interplane distance may be used to calculate the graphitization degree by the following formula:

$$Graphitization\ Degree = \frac{0.3440nm - d_{002}}{0.3440nm - 0.3354nm}$$

A higher graphitization degree may correspond to a higher maximum discharge capacity.

In some embodiments, the method may yield graphite, which is suitable for use as anode material, in particular anode material for lithium batteries.

In some embodiments, the method further comprises the step of manufacturing an anode for lithium batteries using the graphite yielded from (continuously) operating the graphitization furnace.

Although the present invention is defined in the attached embodiments, it should be understood that the present invention can also (alternatively) be defined in accordance with the following embodiments:

1. A graphitization furnace (100) configured to graphitize particulate carbonaceous material comprising:

a raw material inlet (160) and a product outlet (170),
and a channel (110) connecting the raw material inlet (160) and the product outlet (170); wherein the channel (110) comprises an upstream section (120) closer to the raw material inlet (160) and a downstream section (130) closer to the product outlet (170),
wherein both the upstream section (120) and the downstream section (130) comprise a plurality of discrete plate-shaped wall segments (140), (150), and
wherein both the upstream section (120) and the downstream section (130) have a polygonal cross-sectional shape.

2. The graphitization furnace (100) according to embodiment 1, wherein the channel comprises a central-channel-axis (200) and wherein the upstream section (120) and downstream section (130) are arranged along the central-channel-axis (200).

3. The graphitization furnace (100) according to any preceding embodiment, wherein the cross-sectional shape of the upstream section (120) and/or downstream section (130) is polygonal with n corners, wherein n is an integer between 3 and 12.

4. The graphitization furnace (100) according to any preceding embodiment, wherein the cross-sectional shape is formed by the plurality of discrete plate-shaped wall segments (140), (150).

5. The graphitization furnace (100) according to any preceding embodiment, wherein the graphitization furnace (100) is configured such that material flow in the graphitization furnace (100) is gravity assisted.

6. The graphitization furnace (100) according to any preceding embodiment, wherein the graphitization furnace (100) is a vertical graphitization furnace (100).

7. The graphitization furnace (100) according to any preceding embodiment, wherein graphitization furnace (100) comprises an isolation structure surrounding the channel (100).

8. The graphitization furnace (100) according to any preceding embodiment, wherein at least two adjacent discrete plate-shaped wall segments of the plurality of discrete plate-shaped wall segments (140), (150) are connected by at least one joint, in particular at least one detachable joint.

9. The graphitization furnace (100) according to embodiment 8, wherein the at least one joint comprises a dowel joint, a mitre j oint, a cross dowel joint or a dovetail joint.

10. The graphitization furnace (100) according to embodiment 8 or 9, wherein the at least one joint comprises a screw, more specifically a carbonaceous screw, and in particular a screw comprising graphite or carbon fiber reinforced carbon (CFRC).

11. The graphitization furnace (100) according to any one of embodiments 8 to 10, wherein the at least one joint comprises a clamp.

12. The graphitization furnace (100) according to any one of embodiments 8 to 11, wherein the plurality of plate-shaped wall segments (140), (150) is joined by wrapping or clamping, in particular by wrapping with graphite fibers and/or carbon fibers.

13. The graphitization furnace (100) according to any one of embodiments 8 to 12, wherein the at least one joint is sealed.

14. The graphitization furnace (100) according to any one of embodiments 8 to 13, wherein the joint comprises pitch, graphite mats, carbon mats, carbon felts and/or graphite felts.

15. The graphitization furnace (100) according to any preceding embodiment, wherein at least one discrete plate-shaped wall segment comprises a high-temperature-resistant hard coating, in particular wherein all discrete plate-shaped wall segments of the downstream section (130) comprise the high-temperature-resistant hard coating.

16. The graphitization furnace (100) according to any preceding embodiment, wherein at least one wall segment of the plurality of discrete plate-shaped wall segments (140), (150) is gas-permeable.

17. The graphitization furnace (100) according to any preceding embodiment, wherein a first discrete plate-shaped wall segment of the depicted channel (100) is gas-permeable and a second discrete plate-shaped wall segment is gas-impermeable.

18. The graphitization furnace (100) according to any preceding embodiment, wherein the graphitization furnace (100) comprises a gas outlet.

19. The graphitization furnace (100) according to any preceding embodiment, wherein the gas outlet is a tube extending through the isolation structure.

20. The graphitization furnace (100) according to any preceding embodiment, wherein the channel comprises a heating zone, a high temperature reaction zone and a cooling zone.

21. The graphitization furnace (100) according to embodiment 20, wherein, the heating zone is arranged adjacent the raw material inlet (160), the cooling zone is arranged adjacent the product outlet (170) and/or the high temperature reaction zone is disposed between the heating zone and the cooling zone.

22. The graphitization furnace (100) according to embodiment 20 or 21, wherein the gas outlet is arranged in the heating zone and/or high temperature reaction zone.

23. The graphitization furnace (100) according to any one of embodiments 20 to 22 when on embodiment 16 or 17, wherein at least one gas-permeable discrete plate-shaped wall segment is disposed in the heating zone and/or the high temperature reaction zone.

24. The graphitization furnace (100) according to any one of embodiments 20 to 23, wherein the channel (100) comprises at least one gas inlet in the cooling zone or high temperature reaction zone.

25. The graphitization furnace (100) according to any one of embodiments 20 to 24, wherein at least one gas-impermeable discrete plate-shaped wall segment is disposed in the cooling zone, in particular wherein all discrete plate-shaped wall segments disposed in the cooling zone are gas-impermeable.

26. The graphitization furnace (100) according to embodiment 24 or 25, wherein the at least one gas inlet is connected to a gas pump and/or pressure regulator, in particular wherein the purge gas pump and/or pressure regulator is/are configured to maintain a pressure above the ambient pressure in the graphitization furnace (100).

27. The graphitization furnace (100) according to any one of embodiments 24 to 26, wherein the at least one gas inlet is connected to a heat exchanger configured to preheat the injected gas.

28. The graphitization furnace (100) according to any preceding embodiment, wherein the at least one discrete plate-shaped wall segment (140), (150) of the plurality of discrete plate-shaped wall segments (140), (150) comprises or consists of graphite, in particular wherein all of the plurality of discrete plate-shaped wall segments (140), (150) comprise or consist of graphite.

29. The graphitization furnace (100) according to any preceding embodiment, wherein at least one discrete plate-shaped wall segment is a heating element or electrode.

30. The graphitization furnace (100) according to any preceding embodiment, wherein the wall thickness of the channel (100) is between about 5 mm to about 200 mm, in particular wherein the wall thickness of the plurality of discrete plate-shaped wall segments (140), (150) is between about 5 mm to about 200 mm.

31. The graphitization furnace (100) according to any preceding embodiment, wherein the channel (100) comprises an agitator comprising a shaft and at least one mixing paddle.

32. The graphitization furnace (100) according to embodiment 31, wherein the at least one mixing paddle is arranged in the cooling zone.

33. The graphitization furnace (100) according to any one of embodiments 20 to 32, wherein the wall thickness of at least one discrete plate-shaped wall segment in the cooling zone is higher than of at least one discrete plate-shaped wall segment in the heating zone, more specifically the wall thickness of the at least one discrete plate-shaped wall segment in the cooling zone is between about 10 % to about 200 % higher compared to the wall thickness of the at least one discrete plate-shaped wall segment in the heating zone.

34. The graphitization furnace (100) according to any one of embodiments 20 to 33, wherein the wall thickness of at least one discrete plate-shaped wall segment in the high temperature reaction zone is higher than of at least one discrete plate-shaped wall segment in the heating zone, more specifically the wall thickness of the at least one discrete plate-shaped wall segment in the high temperature reaction zone is between about 10 % to about 200 % higher compared to the wall thickness of the at least one discrete plate-shaped wall segment in the heating zone.

**Claims**

1. A graphitization furnace (100) configured to graphitize particulate carbonaceous material comprising:

   a raw material inlet (160) and a product outlet (170),
   and a channel (110) connecting the raw material inlet (160) and the product outlet (170); wherein the channel (110) comprises an upstream section (120) closer to the raw material inlet (160) and a downstream section (130) closer to the product outlet (170),
   wherein both the upstream section (120) and the downstream section (130) comprise a plurality of discrete plate-shaped wall segments (140), (150), and
   wherein both the upstream section (120) and the downstream section (130) have a polygonal cross-sectional shape.

2. The graphitization furnace (100) according to claim 1, wherein the cross-sectional shape of the upstream section (120) and/or downstream section (130) is polygonal with n corners, wherein n is an integer between 3 and 12.

3. The graphitization furnace (100) according to any preceding claim, wherein the cross-sectional shape is formed by the plurality of discrete plate-shaped wall segments (140), (150).

4. The graphitization furnace (100) according to any preceding claim, wherein the graphitization furnace (100) is configured such that material flow in the graphitization furnace (100) is gravity assisted, in particular wherein the graphitization furnace (100) is a vertical graphitization furnace (100).

5. The graphitization furnace (100) according to any preceding claim, wherein at least two adjacent discrete plate-shaped wall segments of the plurality of discrete plate-shaped wall segments (140), (150) are connected by at least one joint, in particular at least one detachable joint.

6. The graphitization furnace (100) according to any preceding claim, wherein the at least one joint comprises a dowel joint, a mitre joint, a cross dowel joint or a dovetail joint.

7. The graphitization furnace (100) according to any preceding claim, wherein the at least one joint is sealed, in particular wherein the joint is sealed with a sealing means comprising pitch, resins, carbon, graphite, graphite mats, graphite foil, expanded graphite , carbon mats, carbon felts and/or graphite felts, carbon fibers, CFRC.

8. The graphitization furnace (100) according to any preceding claim, wherein at least one discrete plate-shaped wall segment comprises a high-temperature-resistant hard coating, in particular wherein all discrete plate-shaped wall segments of the downstream section (130) comprise the high-temperature-resistant hard coating.

9. The graphitization furnace (100) according to any preceding claim, wherein at least one wall segment of the plurality of discrete plate-shaped wall segments (140), (150) is gas-permeable; in particular wherein a first discrete plate-shaped wall segment of the depicted channel (100) is gas-permeable and a second discrete plate-shaped wall segment is gas-impermeable.

10. The graphitization furnace (100) according to any preceding claim, wherein the channel comprises a heating zone, a high temperature reaction zone and a cooling zone and wherein the heating zone is arranged adjacent the raw material inlet (160), the cooling zone is arranged adjacent the product outlet (170) and/or the high temperature reaction zone is disposed between the heating zone and the cooling zone.

11. The graphitization furnace (100) according to any preceding claim, wherein a gas outlet is arranged in the heating zone and/or high temperature reaction zone.

12. The graphitization furnace (100) according to any preceding claim, wherein at least one gas-permeable discrete plate-shaped wall segment is disposed in the heating zone and/or the high temperature reaction zone.

13. The graphitization furnace (100) according to any preceding claim, wherein the wall thickness of the plurality of discrete plate-shaped wall segments (140), (150) is between about 5 mm to about 200 mm.

14. The graphitization furnace (100) according to any preceding claim, wherein the wall thickness of the at least one discrete plate-shaped wall segment in the cooling zone is between about 10 % to about 200 % higher compared to the wall thickness of the at least one discrete plate-shaped wall segment in the heating zone.

15. The graphitization furnace (100) according to any preceding claim, wherein the wall thickness of the at least one discrete plate-shaped wall segment in the high temperature reaction zone is between about 10 % to about 200 % higher compared to the wall thickness of the at least one discrete plate-shaped wall segment in the heating zone.

**Figure 1**

**Figure 2**

Europäisches
Patentamt

European
Patent Office

Office européen
des brevets

# EUROPEAN SEARCH REPORT

**Application Number**

EP 23 17 0106

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 4 900 247 A (TAKAHASHI SUSUMU [JP])<br>13 February 1990 (1990-02-13)<br>* column 1, lines 6-9, 42-67 *<br>* column 2, lines 14-63; figures 1-2 *<br>* the whole document * | 1-3,5-7,<br>9-13<br>4,8,14,<br>15 | INV.<br>C01B32/05<br>C01B32/205<br>C04B11/028<br>C10B3/00<br>F27B1/10 |
| X<br><br>Y<br>A | US 2022/371898 A1 (MUCK MATTHIAS [DE] ET<br>AL) 24 November 2022 (2022-11-24)<br>* paragraphs [0046] - [0065]; figures 1-4<br>*<br>* the whole document * | 1-4,14,<br>15<br><br>8<br>5-7,9-13 | |
| Y | CN 110 465 253 B (UNIV TAIYUAN TECHNOLOGY)<br>22 June 2021 (2021-06-22)<br>* example 2 *<br>* the whole document * | 8 | |
| A | WO 2019/124466 A1 (CFC DESIGN INC [JP])<br>27 June 2019 (2019-06-27)<br>* the whole document * | 1-15 | |

**TECHNICAL FIELDS SEARCHED (IPC)**

C01B
F27D
C10H
C04B
C10B
F27B

The present search report has been drawn up for all claims

| Place of search | Date of completion of the search | Examiner |
|---|---|---|
| The Hague | 23 October 2023 | Follens, Lana |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                                  

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 17 0106

This annex lists the patent family members relating to the patent documents cited in the above-mentioned European search report.
The members are as contained in the European Patent Office EDP file on
The European Patent Office is in no way liable for these particulars which are merely given for the purpose of information.

23-10-2023

| Patent document cited in search report | | | Publication date | Patent family member(s) | | | Publication date |
|---|---|---|---|---|---|---|---|
| US 4900247 | A | | 13-02-1990 | JP | H0322710 | Y2 | 17-05-1991 |
| | | | | JP | H01173176 | U | 08-12-1989 |
| | | | | US | 4900247 | A | 13-02-1990 |
| US 2022371898 | A1 | | 24-11-2022 | CN | 114514196 | A | 17-05-2022 |
| | | | | DE | 102019126394 | A1 | 01-04-2021 |
| | | | | EP | 4038017 | A1 | 10-08-2022 |
| | | | | JP | 2022550405 | A | 01-12-2022 |
| | | | | KR | 20220071253 | A | 31-05-2022 |
| | | | | TW | 202124278 | A | 01-07-2021 |
| | | | | US | 2022371898 | A1 | 24-11-2022 |
| | | | | WO | 2021063603 | A1 | 08-04-2021 |
| CN 110465253 | B | | 22-06-2021 | NONE | | | |
| WO 2019124466 | A1 | | 27-06-2019 | CN | 111492194 | A | 04-08-2020 |
| | | | | DE | 112018005977 | T5 | 06-08-2020 |
| | | | | JP | 6960845 | B2 | 05-11-2021 |
| | | | | JP | 2019113211 | A | 11-07-2019 |
| | | | | KR | 20200087246 | A | 20-07-2020 |
| | | | | WO | 2019124466 | A1 | 27-06-2019 |

EPO FORM P0459

For more details about this annex : see Official Journal of the European Patent Office, No. 12/82